Europäisches Patentamt

European Patent Office

Office européen des brevets

(19)

(11) Publication number: 0 390 755
A2

# (12) EUROPEAN PATENT APPLICATION

(21) Application number: 90830122.9

(51) Int. Cl.5: **D04H 13/00, D04H 5/02**

(22) Date of filing: **27.03.90**

(30) Priority: **31.03.89 IT 6723189**

(43) Date of publication of application:
**03.10.90 Bulletin 90/40**

(84) Designated Contracting States:
**AT BE CH DE DK ES FR GB GR LI LU NL SE**

(71) Applicant: **SAVAL S.R.L.**
**Via Piave 15**
**I-10045 Piossasco (Torino)(IT)**

(72) Inventor: **Ionescu, Adrian Costantin**
**C.so Regina Margherita, 65**
**I-10124 Torino(IT)**
Inventor: **Tedesco, Carmine**
**Via Piave, 15**
**I-10045 Piossasco (TO)(IT)**
Inventor: **Castrignano, Mario**
**Via Piossasco, 22**
**I-10040 Volvera (TO)(IT)**

(74) Representative: **Rambelli, Paolo et al**
**Jacobacci-Casetta & Perani S.p.A. Via Alfieri**
**17**
**I-10121 Torino(IT)**

(54) **Composite layered geotextile having low deformability and high filtering and drainage capability.**

(57) A laminated composite geotextile with a good filtering-drainage capacity and an extensibility of at least 50% less than that of conventional geotextiles or known composites having similar tensile strength is produced by the interconnection of at least one layer which is adapted to afford tensile strength and low deformation and a set of two or more layers having good drainage and/or filtering properties.

EP 0 390 755 A2

Xerox Copy Centre

## A laminated composite geotextile with low deformability and a high filtering-drainage capacity

The present invention relates to a laminated composite geotextile formed by a plurality of interconnected layers.

In recent years, the development of construction technologies based on the use of geotextiles has generated a considerable need for the diversification of the materials used in dependence on the specific site and working conditions imposed by the construction works themselves.

There is a particular need for new materials which can respond to the requirements for reinforcement with low deformability and a good filtering-drainage capacity. These requirements are dictated by conditions such as:

- a lack of construction space and a need to reduce as much as possible the quite extensive land areas which are already covered by buildings in order to leave land for agriculture;

- a pressing need to reduce the use of non-cohesive granular materials, such as gravel, sand and mixed aggregates, and, strictly dependent thereon, the fuel consumption and costs necessarily involved in transporting and using these materials;

- an obligation, at times, to use as construction sites poor load-bearing ground which, as well as requiring mechanical improvement, also needs hydraulic improvement measures.

The object of the present invention is to satisfy current requirements by the provision of new materials which, whilst retaining some of the basic characteristics of conventional geotextiles, that is, their filtering-drainage and anti-contaminant properties, respond to the reinforcement requirements cited above.

For this purpose, the subject of the present invention is a laminated composite geotextile formed by a plurality of interconnected layers, characterised in that it includes at least two geotextile layers having filtering and/or drainage characteristics selected from:

a1) - a conventional woven or non-woven geotextile layer which acts primarily as a filter and is made of synthetic yarns or fibres with interspace or pore apertures of between 50 and 100 micrometers;

a2) - a non-woven geotextile layer made of synthetic fibres of a high denier greater than 30 dtex and having pore apertures at least three times larger than those of the layer of type a1); the said at least two geotextile layers being connected to at least one reinforcing layer selected from the group consisting of:

b1) - a layer of fabric of synthetic monofilaments and/or parallel and/or twisted multifilaments and/or spun-fibre yarns with substantially balanced tensile strengths greater than 125 daN/5cm (strip method) in both production directions and an extensibility of less than 20%;

b2) - a layer of fabric of mineral yarns with substantially balanced tensile strengths greater than 200 daN/5cm (strip method) in both production directions and an extensibility of less than 15%;

b3) - a layer of net of synthetic or mineral filaments connected by thermal and/or chemical means so as to have substantially balanced tensile strengths greater than 150 daN/5cm (strip method) in both production directions and an extensibility of less than 20%;

b4) - a non-woven textile layer of synthetic fibrillated filaments or fibres consolidated by mechanical and/or chemical and/or thermal means, with substantially balanced tensile strength characteristics greater than 80 daN/5cm (strip method) in both production directions and an extensibility of less than 30%; and

b5) a non-woven textile layer of mineral fibres consolidated by thermal and/or chemical means with substantially balanced tensile strengths greater than 100 daN/5cm (strip method) in both production directions and an extensibility of less than 20%.

The reinforcing layer of type b1) - b5) is preferably interposed between the layers a1) and a2) which, as well as constituting the filtering drainage part of the composite geotextile, also perform the function of protecting the reinforcing layer.

The reinforcing layer can be selected in dependence on the specific requirements for which the composite geotextile is intended.

The filtering-drainage part of the composite geotextile may be constituted by more than two layers. Thus, for particular applications, the invention also includes a geotextile formed by a pair of layers of type a1) having filtering characteristics, between which is interposed a layer of type a2) connected to any one of the layers b1) - b5) defined above.

In particular, the use of the reinforcing layers of types b2) and b3) is preferred. The layers of type b2) of mineral yarns are made, for example, of glass fibres or metal filaments such as copper, aluminium or steel filaments.

The composite geotextile according to the invention can be produced by one of the mechanical, thermal and thermochemical methods described below.

A) The mechanical method.

The mechanical method is usable when the layers of type b) are not metallic and may include the following procedures:

A1. The pile of layers a) and b) is passed through a raising machine. The vibrating table of the machine is provided with needles whose barbs point downwards. The density of the needles, the arrangement and depth of penetration, and the speed of advance are adjusted so as to achieve a continuous and uniform connection without reducing the mechanical characteristics of the layer b) by more than 10%.

A2. The layers a) and b) constituting the composite geotextile are connected with the use of a stitching machine. The count of the sewing yarn used is at least equal to that of the yarns of the layer b) when the latter is woven or at least ten times greater than the count of the fibres constituting the layer b) when it is a non-woven textile. The pattern of the stitching is selected so as to achieve a continuous and uniform connection.

A3. When, for reasons of thickness or function, the set of layers a) and b) is intended to undergo a final chemical or thermal treatment, only one layer of type a) and one layer of type b) are sewn together; the second layer a) is connected subsequently during the final thermal or thermochemical treatment described below.

B. The thermal method.

B1. The pile of layers a) and b) is passed through a heat-sealing plant with one or more heated rollers; in this case, one or both of the layers of type a) contain between 10 and 20% of fibres or yarns of a polymer having a melting point at least 50C° below the melting point of the rest of the fibres or yarns constituting the layer; the rollers are heated to a temperature such as to melt the polymer with the lower melting point.

B2. According to an innovative variant, the pile of layers a) and b) is passed through a heat-sealing plant with one or more heated rollers, together with a layer c) of a synthetic material having a melting point 50C° below the lowest melting point of the fibres or yarns constituting the main layers a) and b); the rollers of the heat-sealing plant are heated to a temperature between the melting point of the layer c) and the lowest melting point of the fibres or yarns constituting the main layers.

The supplementary layer may be a continuous, uniform film, a continuous film which is perforated or slotted, a non-woven lightweight fabric, preferably weighing less than 80 grams/m², or a fabric of fibrillated fibres.

C. The thermochemical method.

According to this method, the pile of layers a) and b) is fed through a resin-bonding plant. The resin can be distributed throughout the material dry if the resin is powdered or wet if the resin is in solution. The type of resin is selected in dependence on the polymer from which the layers to be connected are made.

The composite geotextile of the invention is intended in particular for reinforcing all earthworks which, in addition to the need for improvements in the mechanical characteristics of the foundations or of the body of the structure, also need improvements in their hydraulic characteristics and control of the influx of water to the foundations and the structure as a whole.

## Claims

1. A laminated composite geotextile formed by a plurality of interconnected layers, characterised in that it includes at least two geotextile layers having filtering and/or drainage characteristics selected from:

a1) a conventional woven or non-woven geotextile layer which acts primarily as a filter and is made of synthetic yarns or fibres and has interspace or pore apertures of between 50 and 100 micrometers;

a2) a non-woven geotextile layer made of synthetic fibres of a high denier greater than 30 dtex and having pore apertures at least three times larger than those of the aforesaid layer of type a1);

and at least one reinforcing layer selected from the group consisting of:

b1) - a layer of fabric of synthetic monofilaments and/or parallel and/or twisted multifilaments and/or spun-fibre yarns so as to have substantially balanced tensile strengths less than 125 daN/5cm (strip method) in both production directions and an extensibility of less than 20%;

b2) - a layer of fabric of mineral yarns with substantially balanced tensile strengths greater than 200 daN/5cm (strip method) in both production directions and an extensibility of less than 15%;

b3) - a layer of net of synthetic or mineral filaments connected by thermal and/or chemical means so as to have substantially balanced tensile strengths greater than 150 daN/5cm (strip method) in both production directions and an extensibility of less than 20%;

b4) - a non-woven textile layer of synthetic fibrillated filaments or fibres consolidated by mechanical and/or thermal means, with substantially balanced tensile strength characteristics greater than 80 daN/5cm (strip method) in both production directions and an extensibility of less than 30%; and

b5) - a non-woven textile layer of mineral fibres consolidated by thermal and/or chemical means with substantially balanced tensile strengths greater than 100 daN/5cm (strip method) in both production directions and an extensibility of less than 20%.

2. A composite geotextile according to Claim 1, characterised in that it comprises a pair of layers of type a1) between which a layer of type a2) is interposed.

3. A composite geotextile according to Claim 1 or Claim 2, characterised in that the reinforcing layer b1)-b5) is interposed between two layers selected from a1) and a2).

4. A composite geotextile according to any one of Claims 1 to 3, in which the layers constituting the geotextile are interconnected by a raising process.

5. A composite geotextile according to any one of Claims 1 to 3, in which the layers constituting the geotextile are interconnected by stitching.

6. A composite geotextile according to any one of Claims 1 to 3, characterised in that at least one of the layers of type a) includes from 10 to 20% of fibres or yarns of a polymer with a melting point at least 50C˚ below the melting point of the rest of the fibres or yarns constituting the layer, the layers constituting the composite geotextile being interconnected by heat-sealing by the feeding of the pile of layers to a heat-sealing plant with rollers heated to a temperature such as to melt the polymer with the lower melting point.

7. A composite geotextile according to any one of Claims 1 to 3, characterised in that the layers are interconnected by heat-sealing as a result of the melting of an auxiliary layer of synthetic material having a melting point at least 50C˚ below the lowest melting point of the fibres or yarns constituting the layers a) and b).

8. A composite geotextile according to any one of Claims 1 to 3, in which the layers are interconnected by an application of adhesive resin.